# FASCICULE DE BREVET EUROPEEN

(11) **EP 1 590 711 B1**
(45) Date de publication et mention de la délivrance du brevet: **23.01.2008**
(21) Numéro de dépôt: 04707590.8
(22) Date de dépôt: 03.02.2004
(51) Int. Cl.: G05B 19/042

(54) **PROCEDE DE CONFIGURATION D'UNE INSTALLATION DOMOTIQUE**
VERFAHREN ZUM KONFIGURIEREN EINER HAUSAUTOMATISIERUNGSINSTALLATION
METHOD FOR CONFIGURING A HOME AUTOMATION INSTALLATION

(30) Priorité: 05.02.2003 FR 0301335
(43) Date de publication de la demande: 02.11.2005
(73) Titulaire: Somfy SAS, 74300 Cluses (FR)
(72) Inventeur: AUTRET, Capucine, F-74460 Marnaz (FR)
(74) Mandataire: Bugnion Genève
(86) Numéro de dépôt international: PCT/IB2004/000277
(87) Numéro de publication internationale: WO 2004/070482

(56) Documents cités:
- EP-A- 0 838 740

## Description

L'invention concerne un procédé de constitution de sous-groupes d'éléments dans une installation domotique comprenant des groupes d'éléments susceptibles d'être commandés par une unité de gestion. L'invention concerne encore un procédé de commande d'éléments dans une installation domotique et une installation domotique comprenant des éléments susceptibles d'être commandés par une unité de gestion.

II est courant dans le domaine des installations domotiques, de définir des groupes et des sous-groupes d'éléments qui fonctionnent simultanément lorsqu'un ordre de commande est émis. C'est le cas, par exemple, de la commande groupée, où un certain nombre d'éléments est relié ou programmé pour être commandé par un émetteur d'ordres.

Bien que la définition des groupes soit rendue très simple grâce aux outils de programmation, il existe de nombreux cas de commande, notamment pour les transmissions filaires, pour lesquels la définition des sous-groupes une fois l'installation terminée a un caractère fixe et ne peut par conséquent pas être modifiée facilement. Même dans le cas de systèmes déjà installés, dont la transmission d'ordres se fait par le biais d'ondes électromagnétiques, une modification des sous-groupes commandés implique une re-programmation parfois contraignante des associations entre éléments et émetteurs d'ordres.

Le but de l'invention est fournir un procédé de constitution de sous-groupes parmi un groupe d'éléments palliant aux inconvénients cités et améliorant les procédés connus. L'invention se propose en particulier de fournir un procédé simplifiant la gestion des sous-groupes d'éléments et rendant leur définition très flexible.

Le procédé de constitution de sous-groupes d'éléments selon l'invention est caractérisé par la partie caractérisante de la revendication 1.

Les revendications dépendantes 2 à 10 définissent différents modes d'exécution du procédé selon l'invention.

La revendication 11 definit une installation domotique selon l'invention.

Ce procédé ne nécessite aucune intervention de l'utilisateur ou de l'installateur au niveau de l'élément à commander. II peut être appliqué à la commande de dispositifs d'éclairage, de chauffage, de climatisation, de ventilation, etc.

Le procédé de commande selon l'invention est tel que les éléments réagissent ou non ou différemment à un ordre de commande reçu en fonction du sous-groupe dans lequel ils sont affectés.

L'installation domotique selon l'invention comprend des éléments susceptibles d'être commandés par une unité de gestion et est caractérisée en ce qu'elle comprend des moyens logiciels pour la mise en oeuvre des procédés selon l'invention.

Le dessin annexé représente, à titre d'exemple, un mode d'exécution du procédé de classification automatique selon l'invention.
La figure 1 est un schéma d'une installation permettant la mise en oeuvre du procédé selon l'invention.
La figure 2 est un ordinogramme d'un mode d'exécution du procédé selon l'invention.
La figure 3 est un ordinogramme détaillé de ce mode d'exécution du procédé selon l'invention.

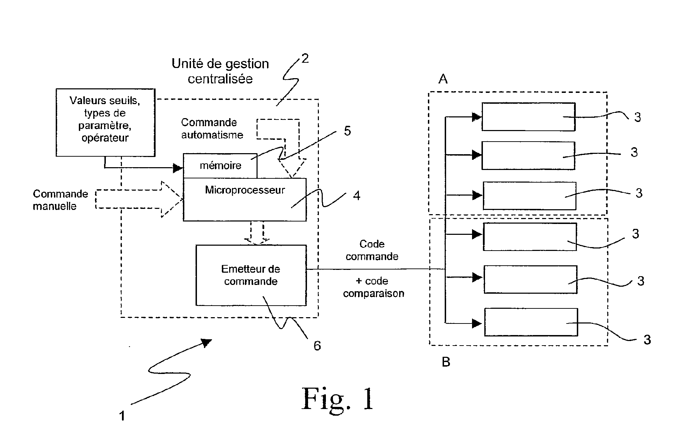

L'installation 1 représentée schématiquement à la figure 1 comprend principalement une unité de gestion 2 et des éléments 3 pilotés par celle-ci. Ces éléments classés en plusieurs groupes A, B équipent un bâtiment et sont destinés à assurer sa sécurité et/ou son confort. L'unité de gestion 2 permet l'envoi d'ordres de commande de manière manuelle ou automatique en direction des différents éléments 3. Afin de simplifier la compréhension de l'invention, nous considérons dans la suite de cette description que les éléments du groupe A sont des volets roulants et que ceux-ci peuvent être classés en différents sous-groupes par la connaissance de leur course qui constitue un de leurs paramètres caractéristiques. Les éléments du groupe B peuvent par exemple consister en des dispositifs de chauffage et de climatisation.

Cette valeur de course est une longueur dont on peut de manière relativement simple obtenir des images en comptant entre une fin de course haute et une fin de course basse, le nombre d'impulsions d'un capteur disposé dans la chaîne cinématique ou le temps de manoeuvre.

Ainsi, les volets roulants dont l'image de la course se révèle supérieure à une valeur seuil, sont présumés équiper des portes, des portes-fenêtres ou des baies vitrées et les volets roulants dont l'image de la course se révèle inférieure à une valeur seuil, sont présumés équiper des fenêtres.

Il est en effet judicieux de classer les volets roulants en deux sous-groupes tels que décrits ci-dessus dans la mesure où les ouvertures qu'ils équipent ont des fonctionnalités différentes. Les ouvertures de type "fenêtre" sont fortement liées à des problématiques de protection solaire, de ventilation, tandis que pour les ouvertures de type "portes", il est essentiel de tenir compte des besoins propres à l'accès, en termes de sécurité par exemple.

L'unité de gestion 2 présente un microprocesseur 4 et une mémoire 5 permettant de stocker des valeurs seuil associées à des opérateurs de comparaison utilisés pour classer les différents éléments en fonctions de leurs caractéristiques. Ces valeurs seuil et ces opérateurs peuvent, par exemple, être entrés dans l'unité de gestion par l'utilisateur lors d'une phase de configuration.

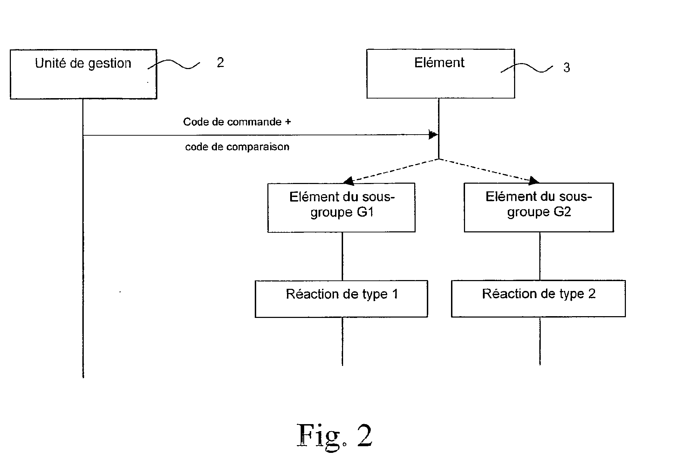

L'unité de gestion 2 traduit cet ensemble de critères de comparaison sous forme d'un code de comparaison. Ainsi que représenté à la figure 2, l'unité de gestion envoie grâce à des moyens d'émission 6 de signaux, par exemple de type radioélectrique, un ordre de commande particulier vers l'ensemble des éléments. L'ordre de commande comprend le code de comparaison traduisant la ou les valeurs seuil prédéfinies et/ou les opérateurs de comparaison. Les éléments se classent d'eux-mêmes dans des sous-groupes G1 et G2 distincts et réagissent de manière particulière à l'ordre émis en fonction du sous-groupe G1 ou G2 auquel ils appartiennent.

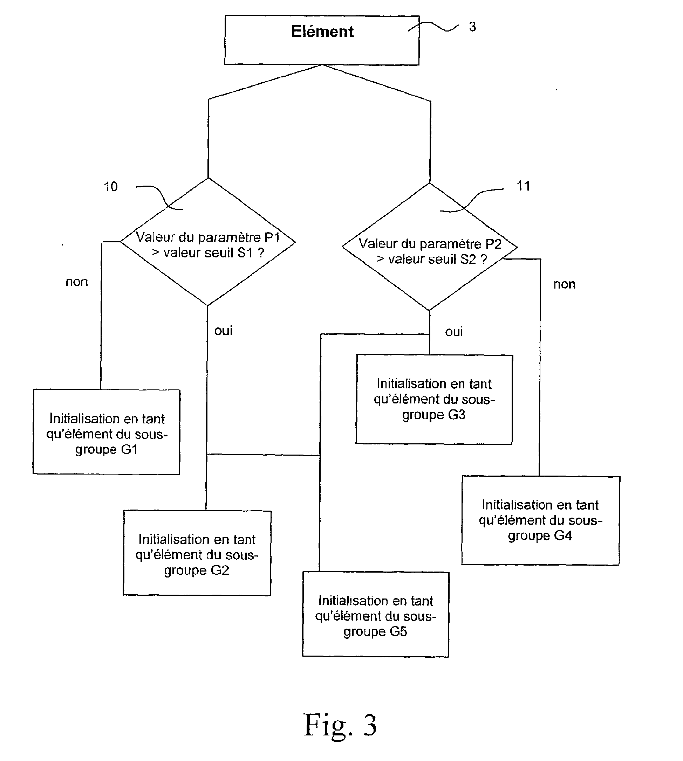

Comme représenté à la figure 3, correspondant à un procédé de classification appliqué à des éléments pouvant être classés grâce à l'utilisation de deux paramètres P1 et P2, après réception de l'ordre de commande, les valeurs de ces paramètres P1 et P2 sont comparées à des valeurs seuil de référence S1 et S2.

Au niveau du test 10, si la valeur de paramètre P1 est inférieure à la valeur seuil S1, l'élément se classe automatiquement dans un sous-groupe G1, si elle est supérieure à la valeur seuil S1, il se classe automatiquement dans un sous-groupe G2. De même, au niveau du test 11, si la valeur de paramètre P2 est supérieure à la valeur seuil S2, l'élément se classe automatiquement dans un sous-groupe G3, si elle est inférieure à la valeur seuil S2, il se classe automatiquement dans un sous-groupe G4.

Il est également possible de prévoir des combinaisons de valeurs de paramètres P1 et P2, de manière à créer des sous-groupes définis comme intersections de sous-groupes. Pour des raisons de lisibilité, seule une combinaison a été représentée. Si un élément présente une valeur de paramètre P1 supérieure à la valeur seuil S1 ET une valeur de paramètre P2 supérieure à la valeur seuil S2, alors l'élément se classe dans un sous-groupe G5.

Dans le cadre de l'exemple d'un volet roulant dont le paramètre caractéristique est la course, la valeur seuil programmée L est légèrement supérieure à la durée de manoeuvre ou au nombre d'impulsions comptées lors d'un mouvement du volet roulant entre sa fin de course basse et sa fin de course haute lorsqu'il équipe une fenêtre. Ainsi, en fonction de la valeur de la course du volet roulant, inférieure ou supérieure à la valeur de référence, le volet roulant est classé automatiquement dans un sous-groupe de type "fenêtre" ou dans un sous-groupe de type "porte".

Une seconde valeur seuil L' inférieure à la hauteur d'une fenêtre pourrait être mémorisée pour définir les critères de comparaison. Dans ce cas, il n'est pas utile de définir d'opérateur. Un premier sous-groupe est défini par un paramètre inférieur à L et un deuxième sous-groupe par un paramètre inférieur à L'.

Dans une variante d'exécution, le procédé comporte une étape d'enregistrement des sous-groupes d'éléments constitués. Ainsi, il est possible de distinguer une classification dynamique, telle qu'à chaque commande, les sous-groupes sont reconstitués en fonction du critère de comparaison, d'une classification statique. Pour cette dernière, l'enregistrement des sous-groupes permet d'émettre des commandes sélectives pour un sous-groupe donné, tout en gardant la flexibilité de réorganiser les sous-groupes au besoin.

Dans le cas de l'enregistrement des sous-groupes, il est possible de leur donner un identifiant.

Des exemples de paramètres caractéristiques sont, pour des dispositifs motorisés d'occultation d'ouvertures du bâtiment : le type d'écran d'occultation, la valeur de la course totale du moyen d'occultation (comme décrit précédemment), la présence ou non de butées ou les références du constructeur, en terme de couple ou de vitesse de rotation.

Pour chaque paramètre, il est possible de définir une valeur seuil. En-dessous ou au-delà de cette valeur, les éléments correspondants pourront avoir des comportements différents en réponse à l'émission d'un ordre de commande. Ces valeurs seuil peuvent être stockées en mémoire au niveau des éléments ou au niveau de l'unité de gestion. Dans ce dernier cas, elles seront transmises lors de l'émission d'un ordre de commande.

Le procédé de constitution automatique de sous-groupes peut être mis en oeuvre consécutivement à un ordre de commande effectué manuellement par l'utilisateur ou à un ordre de commande effectué de manière automatique par l'unité de gestion ou lors d'une étape de configuration de l'installation.

Dans la pratique, l'utilisateur peut définir pour un canal de commande de l'unité de gestion permettant la commande d'un groupe d'éléments, une ou plusieurs valeurs seuil et/ou éventuellement un ou plusieurs types de paramètre correspondant et/ou un ou plusieurs opérateurs de comparaison tels que « supérieur », « inférieur » ou « égal ».

Un critère de comparaison peut ainsi être défini par deux valeurs seuil, ou par une valeur seuil et un opérateur, pour un ou plusieurs types de paramètre.

Ces critères de comparaison peuvent être mis en mémoire au niveau de l'unité de gestion et transmis sous forme de code de comparaison vers un groupe d'éléments lors de la transmission d'un ordre de commande.

Des critères de comparaison peuvent être également mémorisés au niveau des éléments.

En fonction des paramètres internes des éléments et des critères de comparaison transmis, les éléments pilotés réagissent différemment aux ordres de commande.

Ainsi, au lieu d'enregistrer un certain nombre d'identifiants d'éléments sur un canal de transmission comme c'est le cas dans l'art antérieur, il suffit de mettre en mémoire, pour un canal donné, un ou des critères de comparaison. Les éléments commandés se classent alors d'eux-mêmes. La définition des sous-groupes est donc très flexible.

La réaction des éléments à des ordres de commande peut être de type "tout ou rien", mais également suivre des lois de comportement plus complexes, par exemple atteindre une position intermédiaire.

## Revendications

1. Procédé de constitution de sous-groupes d'éléments dans une installation domotique comprenant des groupes d'éléments susceptibles d'être commandés par une unité de gestion, **caractérisé en ce qu'**il comprend les étapes suivantes :
- émission d'un signal comprenant au moins un critère de comparaison, de l'unité de gestion vers au moins un groupe d'éléments,
- comparaison d'au moins un paramètre caractéristique de chacun des éléments du groupe avec une valeur seuil,
- affectation, en fonction du résultat de l'étape précédente, de chacun des éléments du groupe dans un sous-groupe.

2. Procédé de constitution de sous-groupes d'éléments selon la revendication 1, **caractérisé en ce que** le critère de comparaison du signal comprend au moins un opérateur et/ou une valeur seuil.

3. Procédé de constitution de sous-groupes d'éléments selon la revendication 1 ou 2, **caractérisé en ce qu'**il comprend une étape d'enregistrement des sous-groupes d'éléments constitués.

4. Procédé de constitution de sous-groupes d'éléments selon la revendication précédente, **caractérisé par** une affectation d'un identifiant à chaque sous-groupe enregistré.

5. Procédé de constitution de sous-groupes d'éléments selon l'une des revendications précédentes, **caractérisé en ce que** le paramètre caractéristique des éléments est déterminé lors d'une phase d'apprentissage au moment de l'installation.

6. Procédé de constitution de sous-groupes d'éléments selon l'une des revendications précédentes, **caractérisé en ce que** les éléments sont des dispositifs motorisés d'occultation des ouvertures d'un bâtiment.

7. Procédé de constitution de sous-groupes d'éléments selon l'une des revendications précédentes, **caractérisé en ce que** le paramètre caractéristique des éléments est lié à une référence du fabricant.

8. Procédé de constitution de sous-groupes d'éléments selon la revendication 6, **caractérisé en ce que** le paramètre caractéristique des éléments est une valeur de course.

9. Procédé de constitution de sous-groupes d'éléments selon la revendication précédente, **caractérisé en ce que** des images des valeurs de course utilisées pour la comparaison du paramètre caractéristique sont obtenues par comptage d'impulsions ou par mesure de la durée de manoeuvre entre les deux fins de course.

10. Procédé de commande d'éléments dans une installation domotique, **caractérisé en ce que** les éléments réagissent ou non ou différemment à un ordre de commande reçu en fonction du sous-groupe dans lequel ils sont affectés selon le procédé d'une des revendications 1 à 9.

11. Installation domotique (1) comprenant des éléments (3) susceptibles d'être commandés par une unité de gestion (2), **caractérisée en ce que** l'installation (1) comprend :
- des moyens d'émission d'un signal comprenant au moins un critère de comparaison, de l'unité de gestion vers au moins un groupe d'éléments,
- des moyens de comparaison d'au moins un paramètre caractéristique de chacun des éléments du groupe avec une valeur seuil,
- des moyens d'affectation, en fonction du résultat de l'étape précédente, de chacun des éléments du groupe dans un sous-groupe, et
- des moyens logiciels pour la mise en oeuvre du procédé selon l'une des revendications 1 à 10.

## Claims

1. Method for forming sub-groups of elements in a home automation installation comprising groups of elements likely to be controlled by a management unit, **characterized in that** it comprises the following steps:
- transmitting a signal comprising at least one comparison criterion from the management unit to at least one group of elements,
- comparing at least one parameter characteristic of each of the elements of the group with a threshold value,
- assigning, according to the result of the preceding step, each of the elements of the group to a subgroup.

2. Method for forming subgroups of elements according to Claim 1, **characterized in that** the criterion for comparing the signal comprises at least one operator and/or one threshold value.

3. Method for forming subgroups of elements according to Claim 1 or 2, **characterized in that** it comprises a step of recording the subgroups of elements formed.

4. Method for forming subgroups of elements according to the preceding claim, **characterized by** an assignment of an identifier to each recorded subgroup.

5. Method for forming subgroups of elements according to one of the preceding claims, **characterized in that** the parameter characteristic of the elements is determined during a learning phase at the time of installation.

6. Method for forming subgroups of elements according to one of the preceding claims, **characterized in that** the elements are motorized privacy devices for openings of a building.

7. Method for forming subgroups of elements according to one of the preceding claims, **characterized in that** the parameter characteristic of the elements is linked to a reference of the manufacturer.

8. Method for forming subgroups of elements according to Claim 6, **characterized in that** the parameter characteristic of the elements is a travel value.

9. Method for forming subgroups of elements according to the preceding claim, **characterized in that** images of the travel values used for comparing the characteristic parameter are obtained by counting pulses or by measuring the duration of operation between the two ends of travel.

10. Method for controlling elements in a home automation installation, **characterized in that** the elements react or do not react or react differently to a control command received according to the subgroup to which they are assigned according to the method of one of Claims 1 to 9.

11. Home automation installation (1) comprising elements (3) likely to be controlled by a management unit (2), **characterized in that** the installation (1) comprises:
- means for transmitting a signal comprising at least one comparison criterion from the management unit to at least one group of elements,
- means for comparing at least one parameter characteristic of each of the elements of the group with a threshold value,
- means for assigning, according to the result of the preceding step, each of the elements of the group to a subgroup, and
- software means for applying the method according to one of Claims 1 to 10.

## Patentansprüche

1. Verfahren zum Bilden von Untergruppen von Elementen in einer Domotik-Installation mit Gruppen von Elementen, welche dazu geeignet sind, von einer Steuerungseinheit gesteuert zu werden, **dadurch gekennzeichnet, dass** es folgende Schritte umfasst:
- Übertragung eines Signals, das wenigstens ein Vergleichskriterium enthält, von der Steuerungseinheit zu wenigstens einer Gruppe von Elementen,
- Vergleich wenigstens eines charakteristischen Parameters jedes der Elemente der Gruppe mit einem Schwellenwert,
- Zuordnung jedes der Elemente der Gruppe zu einer Untergruppe als Funktion des beim vorhergehenden Schritt erhaltenen Ergebnisses.

2. Verfahren nach Anspruch 1, **dadurch gekennzeichnet, dass** das Vergleichskriterium des Signals wenigstens einen Operator und/oder einen Schwellenwert umfasst.

3. Verfahren nach Anspruch 1 oder 2, **dadurch gekennzeichnet, dass** es einen Schritt der Registrierung der gebildeten Untergruppen von Elementen umfasst.

4. Verfahren nach dem vorhergehenden Anspruch, **dadurch gekennzeichnet, dass** jeder registrierten Untergruppe ein Identifizierungszeichen zugeordnet wird.

5. Verfahren nach einem der vorangehenden Ansprüche, **dadurch gekennzeichnet, dass** der charakteristische Parameter der Elemente während einer Lernphase im Augenblick der Installation bestimmt wird.

6. Verfahren nach einem der vorangehenden Ansprüche, **dadurch gekennzeichnet, dass** die Elemente motorisierte Vorrichtungen zum Verdunkeln der Öffnungen eines Gebäudes sind.

7. Verfahren nach einem der vorangehenden Ansprüche, **dadurch gekennzeichnet, dass** der charakteristische Parameter der Elemente mit einer Bezugnahme auf den Hersteller verknüpft ist.

8. Verfahren nach Anspruch 6, **dadurch gekennzeichnet, dass** der charakteristische Parameter der Elemente ein eine Weglänge darstellender Wert ist.

9. Verfahren nach dem vorangehenden Anspruch, **dadurch gekennzeichnet, dass** Bilder der für einen Vergleich des charakteristischen Parameters verwendeten, eine Weglänge darstellenden Werte durch Zählung von Impulsen oder durch Messung der Betätigungsdauer zwischen zwei Endstellungen erhalten werden.

10. Verfahren um Steuern von Elemente in einer Domotik-Installation, **dadurch gekennzeichnet, dass** die Elemente auf einen Steuerbefehl, den sie als Funktion der Untergruppe, der sie gemäss dem Verfahren nach einem der Ansprüche 1 bis 9 zugeordnet sind, reagieren oder nicht reagieren oder unterschiedlich reagieren.

11. Domotik-Installation (1) mit Elementen (3), die dazu geeignet sind, durch eine Steuerungseinheit (2) gesteuert zu werden, **dadurch gekennzeichnet, dass** die Installation (1) folgende Komponenten aufweist:
- Übertragungsmittel zum Übertragen eines Signals, das wenigstens ein Vergleichskriterium enthält, von der Steuerungseinheit zu wenigstens einer Gruppe von Elementen,
- Mittel zum Vergleichen wenigstens eines charakteristischen Parameters jedes der Elemente der Gruppe mit einem Schwellenwert,
- Zuordnungsmittel, mit denen als Funktion des beim vorhergehenden Schritt erhaltenen Ergebnisses jedes der Elemente der Gruppe einer Untergruppe zugeordnet wird, und
- Software-Mittel zur Durchführung des Verfahrens nach einem der Ansprüche 1 bis 10.
